# EUROPEAN PATENT SPECIFICATION

(11) **EP 3 673 992 B1**
(45) Date of publication and mention of the grant of the patent: **07.02.2024**
(21) Application number: 18848176.6
(22) Date of filing: 22.08.2018
(51) Int. Cl.: B01J 23/62, B01D 53/86, B01D 53/94, F01N 3/10, F01N 3/28

(54) **METHANE OXIDIZING CATALYST**
METHANOXIDATIONSKATALYSATOR
CATALYSEUR D'OXYDATION DU MÉTHANE

(30) Priority: 22.08.2017 JP 2017159397
(43) Date of publication of application: 01.07.2020
(73) Proprietor: Mitsui Mining & Smelting Co., Ltd., Shinagawa-ku Tokyo 141-8584 (JP)
(72) Inventor: TOMITA Junki, Ageo-shi Saitama 362-0021 (JP); MATSUZAWA Masato, Ageo-shi Saitama 362-0021 (JP); SASAKURA Asuka, Ageo-shi Saitama 362-0021 (JP); SUGIOKA Akiko, Ageo-shi Saitama 362-0021 (JP)
(74) Representative: Hoffmann Eitle
(86) International application number: PCT/JP2018/031015
(87) International publication number: WO 2019/039513

(56) References cited:
- EP-A1- 2 214 237
- JP-A- H1 099 688
- JP-A- S6 052 755
- JP-A- H09 271 640
- JP-A- 2006 272 079
- JP-A- 2016 137 458
- US-A- 6 132 694
- MATSUI T ET AL: "Effect of reduction-oxidation treatment on the catalytic activity over tin oxide supported platinum catalysts", SCIENCE AND TECHNOLOGY OF ADVANCED MATERIALS, ELSEVIER SCIENCE, vol. 7, no. 6, 1 September 2006 (2006-09-01), pages 524-530, XP025228545, ISSN: 1468-6996, DOI: 10.1016/J.STAM.2006.02.020 [retrieved on 2006-09-01]
- KAMIUCHI NAOTO ET AL: "Sintering and redispersion of platinum catalysts supported on tin oxide", APPLIED CATALYSIS B. ENVIRONMENTAL, vol. 89, no. 1-2, 3 July 2009 (2009-07-03) , pages 65-72, XP055805776, AMSTERDAM, NL ISSN: 0926-3373, DOI: 10.1016/j.apcatb.2008.11.026
- MURATA, NAOYOSHI et al.: "Characterization of Pt-doped Sn02 catalyst for a high-performance micro gas sensor", Phys. Chem. Chem. Phys, vol. 15, 2013, pages 17938-17946, XP055579396,

## Description

### BACKGROUND OF THE INVENTION

### Field of the Invention

The present invention relates to a methane oxidation catalyst for oxidizing unburnt methane contained in exhaust gas.

### Background Art

Currently, fuel used for diesel engines for generators, ships and the like is heavy oil; however, there has begun serious review in transition to CH₄ fuel in response to the request for preservation and improvement of the environment.

A typical internal combustion engine using CH₄ fuel is a "gas engine". A gas engine is one of the engines used in the so-called "co-generation," which is a cogeneration that generates electricity by utilizing the combustion of gas while utilizing the waste heat for cooling and heating, and thermal demand such as the hot water supply.

Gas engines not only emit a small amount of CO₂, but also have the advantage of being able to be operated with high efficiency even by using natural gas and city gas, as well as low-calorie gases such as those generated in gasification and melting furnaces. Note that, city gas is a gaseous fuel mainly composed of natural gas and typically contains 87 vol % or more of methane.

On the other hand, there has been a problem that unburnt methane, the so-called "methane slip", is generated in a small amount. Methane (CH₄) is said to have a global warming potential 25 times than that of CO₂, and unburnt methane contained in the exhaust gas must be oxidized and removed. Therefore, various oxidation catalysts have been developed for oxidizing such unburnt methane and the like.

For example, Patent Document 1 proposes a catalyst in which platinum is supported on a porous tin oxide, and by use of the catalyst, methane can be oxidized and removed even at a relatively low temperature of 500 °C or less, and also since poisoning degradation due to sulfur oxides is suppressed, methane in the combustion exhaust gas can be oxidized and removed effectively for a long period.

Further, Patent Document 2 proposes a catalyst in which iridium is supported as a promoter on a catalyst in which platinum is supported on a tin oxide, and by supporting iridium as a promoter, methane can be removed by oxidation over a longer period.

Further, Patent Document 3 proposes a catalyst in which rhenium together with platinum and iridium is supported on a titanium oxide support or a tin oxide carrier, and it is considered that the catalyst can effectively oxidize and remove methane in the combustion exhaust gas even at a low temperature of 400 °C or less.

Matsui et al., Science and Technology of Advanced Materials, Vol. 7, No. 6, pages 524-530, discuss the effect of reduction-oxidation treatment on the catalytic activity over tin oxide supported platinum catalysts.

Kamiuchi et al., Applied Catalysis B. Environmental, Vol. 89, No. 1-2, pages 65-72, describe the sintering and redispersion of platinum catalysts supported on tin oxide.

### [Prior art document]

### [Patent Documents]

[Patent Document 1] JP 2004 - 351236 A
[Patent Document 2] JP 2006 - 272079 A
[Patent Document 3] JP 2012 - 196664 A

### SUMMARY OF THE INVENTION

### [Problem to be solved by the invention]

In an internal combustion engine using methane gas, cycles of intake, compression, ignition combustion, and exhaust of methane gas are repeated. The concentration of methane gas in the exhaust gas during the normal cycle is about 0.2 % (2000 ppm); however, when ignition failure (a misfire) occurs, the concentration of methane in the exhaust gas temporarily increases, and the catalyst temperature rises by about 200 °C from the normal temperature (300 to 500 °C).

The methane oxidation catalysts described in Patent Documents 1 to 3, in which platinum is supported on a tin oxide, can effectively oxidize and remove methane even at a low temperature such as 300 to 500 °C; however, at the time of a misfire as described above, the catalyst temperature rises to about 650 °C, causing significant decrease in the catalytic performance. As a result, it was found that once a misfire occurs and the catalytic performance decreases, methane in the combustion exhaust gas cannot be effectively oxidized and removed even when the cycle returns normal.

Accordingly, it is an object of the present invention to further improve the oxidation catalyst in which platinum is supported on a tin oxide, and to provide a new oxidation catalyst capable of maintaining the methane oxidation activity even after the catalyst has been exposed to a high temperature.

### [Means for Solving the Problem]

The present inventors have now found that, in a methane oxidation catalyst in which platinum is supported on a tin oxide, the oxidation of platinum allows the methane oxidation activity of the platinum-supported tin oxide catalyst to be maintained at a low temperature and to maintain the methane oxidation activity even after the catalyst is exposed to a high temperature such as a misfire. The present invention is based on such findings.

The essential technical features of the invention are explicitly defined in the wording of independent claim 1. Further features of the invention are explicitly defined in the wordings of dependent claims 2-5. The methane oxidation catalyst according to the present invention is a methane oxidation catalyst in which a platinum oxide is supported on a tin oxide carrier, wherein
the intensity of an absorption peak obtained in the range of 11555 to 11570 eV in the L₃ edge X-ray absorption near-edge structure (XANES) spectrum of the platinum atom is 1.4 times or more the intensity of the absorption peak measured using a standard platinum foil,
when the maximum peak intensity corresponding to the bond length of the platinum atom-platinum atom bond is expressed as I_{Pt-Pt}, and the maximum peak intensity corresponding to the bond length of the platinum atom-oxygen atom bond is expressed as I_{Pt-o} in the radial distribution function obtained by Fourier transformation of the L₃ edge extended X-ray absorption fine structure (EXAFS) spectrum of the platinum atom, the ratio of I_{Pt-o} to I_{Pt-Pt} (I_{Pt-o} / I_{Pt-Pt}) is 7.0 or more,
the average primary particle diameter of the platinum oxide is 0.5 nm to 2.5 nm, and
the content ratio of platinum element to tin element is 0.3 to 40 mol %.

### [Effect of the Invention]

According to the present invention, the methane oxidation catalyst in which a platinum oxide is supported on a tin oxide carrier can maintain the methane oxidation activity in the same level as in the normal cycle even after the catalyst is exposed to a high temperature, such as during a misfire, by using a methane oxidation catalyst having the intensity of an absorption peak obtained in the range of 11555 to 11570 eV in the L₃ edge X-ray absorption near-edge structure spectrum of the platinum atom 1.4 times or more than the intensity of an absorption peak measured using a standard platinum foil.

### BRIEF DESCRIPTION OF THE DRAWINGS

FIG. 1 shows the L₃ edge XANES spectra of platinum atoms as measured by the transmission method for the respective methane oxidation catalysts of Example 2 and Comparative Example 2, and the respective standard samples of Pt foil and PtO₂.
FIG. 2 shows a radial distribution function obtained by Fourier transforming the L₃ edge EXAFS spectrum of platinum atoms for the respective methane oxidation catalysts of Example 2 and Comparative Example 2, and the respective standard samples of Pt foil and PtO₂.

### DETAILED DESCRIPTION OF THE INVENTION

### [Mode for carrying out the invention]

### < Methane Oxidation Catalyst >

The methane oxidation catalyst of the present invention has a structure in which a platinum oxide is supported on a tin oxide carrier, including a catalyst in which platinum is supported on a tin oxide carrier other than the platinum oxide, without limiting to a catalyst in which only a platinum oxide is supported; however it is clearly distinguished from a methane oxidation catalyst in which platinum is supported on a tin oxide carrier. That is, the present invention is characterized in that the intensity of an absorption peak obtained in the range of 11555 to 11570 eV in the L₃ edge X-ray absorption near-edge structure (hereinafter can be abbreviated as XANES) spectrum of a platinum atom is 1.4 times or more the intensity of an absorption peak measured using a standard platinum foil. In the present invention, the "absorption peak obtained in the range of 11555 to 11570 eV" refers to an absorption peak obtained in the range of 11555 to 11570 eV in the normalized spectrum in the range of 11750 to 11850 eV.

First, the XANES spectrum will be described.

The X-ray absorption fine structure (XAFS) measurement is a measurement technique that measures the wavelength dependence of the X-ray absorption intensity (absorbance) of a substance to obtain the information of the local structure of a substance, such as the chemical bonding state of an absorbed atom, the coordination number and valence of the absorbed atom, and the distribution of the distance between the surroundings of the absorbed atom and its neighboring atoms.

In the X-ray absorption near-edge structure (XANES) which appears at about several 10 eV from the absorption edge, the absorption spectrum appears due to the effect of electron transition from the inner shell to the unoccupied level, and the information of the chemical bonding state such as the coordination number and valence of the absorption atom is very sensitively reflected in the spectrum shape. In the extended X-ray absorption fine structure (EXAFS), which appears at about 1000 eV from the absorption edge, photoelectrons emitted from the absorption atoms are scattered by the surrounding atoms so that the interference between the emitted electron wave and the scattered electron wave modulate the transition probability of the photoelectrons to express a wave-like spectrum. Analyzing of this spectral shape allows one to obtain information of the interatomic distance distribution around the absorption atoms from the absorption atoms.

Excitation of an electron in the inner shell 2p orbital of a platinum atom causes a transition to an empty Pt5d orbital due to electric dipole transition. The state density of the Pt5d empty orbital is reflected in the absorption intensity of the X-ray absorption spectrum at the L₃ absorption edge or the L₂ absorption edge when X-rays are irradiated having energy equal to or greater than the transition energy.

In the present invention, the X-ray absorption near-edge structure (XANES) of a methane oxidation catalyst was analyzed to find that, when the intensity of the absorption peak derived from a platinum oxide appearing in the range of 11555 to 11570 eV among the absorption peaks of the L₃ edge XANES spectrum of the platinum atoms is 1.4 times or more the absorption peak intensity measured using a standard platinum foil, the same methane oxidation activity as in the normal cycle can be maintained even after the catalyst is exposed to a high temperature, such as in the case of a misfire. Without being bound by theory, the methane oxidation catalysts in which the intensity of the absorption peak derived from a platinum oxide appearing in the range of 11555 to 11570 eV in the XANES spectrum is 1.4 times or more the intensity of the absorption peak measured using a standard platinum foil have the platinum oxides supported by tin oxide in a high proportion, and the proportion is low of platinum supported in a non-oxidized platinum metal state. In the case of a catalyst in which platinum is supported on a tin oxide, as in the conventional methane oxidation catalyst, since the individual platinum particles are supported on the tin oxide carrier at the catalyst temperature (300 to 500 °C) during the normal cycle of a gas engine, the platinum particles have the methane oxidation activity; however, when the temperature becomes high (650 °C), the platinum particles aggregate on the tin oxide carrier, so the methane oxidation activity is considered to decrease. On the other hand, the methane oxidation catalyst in which the intensity of the absorption peak derived from a platinum oxide appearing in the range of 11555 to 11570 eV in the XANES spectrum is 1.4 times or more the intensity of the absorption peak measured using a standard platinum foil as in the present invention has platinum oxides as the particles supported on a tin oxide so that the aggregation at high temperatures of the particles is considered to be suppressed compared with the platinum metal particles, and as a result, the methane oxidation activity can be maintained even after the catalyst temperature is exposed to a high temperature.

The intensity of the absorption peak derived from a platinum oxide appearing in the range of 11555 to 11570 eV in the XANES spectrum is preferably at least 1.5 times or more the intensity of the absorption peak measured using a standard platinum foil and more preferably at least 1.7 times or more. The intensity of the absorption peak derived from a platinum oxide as above is preferably 2.8 times or less the intensity of the absorption peak measured using a standard platinum foil.

A catalyst in which platinum is supported on a tin oxide, the conventional methane oxidation catalyst, has the intensity of the absorption peak derived from a platinum oxide appearing in the range of 11555 to 11570 eV in the XANES spectrum of about 1.3 times of the intensity of the absorption peak measured using a standard platinum foil.

In the present specification, the "standard platinum foil" refers to a platinum foil available from The Nilaco Co., Ltd having the product number PT-353138.

In the present invention, the XANES spectrum may be measured by either a transmission method or a fluorescence method.

The proportion of platinum oxides in the catalyst particles supported on the tin oxides can also be evaluated by extended X-ray absorption fine structure (EXAFS) spectrum. In the present invention, in the radial distribution function obtained by Fourier transformation of the L₃ edge extended X-ray absorption fine structure (EXAFS) spectrum of a platinum atom, when the maximum peak intensity corresponding to the bond distance between a platinum atom and a platinum atom is expressed as I_{Pt-Pt} and the maximum peak intensity corresponding to the bond distance between a platinum atom and an oxygen atom is expressed as I_{Pt-o}, the ratio of I_{Pt-o} to I_{Pt-Pt} (I_{Pt-o} / I_{Pt-Pt}) is 7.0 or more. When the ratio of the platinum oxides to platinum in the catalyst particles supported on the tin oxides is about the above ratios, the methane oxidation activity can be further maintained even after the catalyst is exposed to a high temperature. Note that, in the radial distribution function obtained by Fourier transformation of the EXAFS spectrum, I_{Pt-Pt} is the maximum peak intensity in the range of 0.20 to 0.25 nm, and I_{Pt-o} is the maximum peak intensity in the range of 0.10 to 0.20 nm.

The XANES spectrum and the EXAFS spectrum can be measured, for example, by the XAFS analyzer (BL11S2) of the Aichi Synchrotron Light Center (AichiSR), which is conducted by a public foundation. The measurement conditions are as follows.
- Beamline
   Light energy: 11 to 13 keV
   Beam size: 0.50 mm × 0.30 mm (H × V)
- Detection system
   Spectrograph: Si (111) 2 crystal spectrograph
   Detector: Ion chamber
- Analysis software
   Athena (ver.0.8.056)

The platinum oxide supported on the tin oxide includes a divalent platinum oxide having a valence of platinum of 2 and a quadrivalent platinum oxide having a valence of platinum of 4. The oxidation state (valence) of platinum can be evaluated by X-ray photoelectron spectroscopy (hereinafter can be abbreviated as XPS). According to the present invention, in the X-ray photoelectron spectroscopy spectrum obtained by the XPS measurement,
when the peak intensity derived from the divalent platinum oxide is expressed as I_{Pt2}, and
the peak intensity derived from the quadrivalent platinum oxide is expressed as I_{Pt4},
the ratio of I_{Pt2} to I_{Pt4} (I_{Pt2} / I_{Pt4}) is preferably greater than 1. That is, the presence of a larger amount of the divalent platinum oxide than the quadrivalent platinum oxide among the platinum oxides makes it possible to further improve the methane oxidation activity during the normal cycle in the gas engine, and to maintain the same methane oxidation activity during the normal cycle even after the catalyst is exposed to a high temperature, such as during a misfire. The peak derived from the divalent platinum oxide corresponds to the peak of Pt4f_{7/2} with the peak top appearing at the position of 70.0 to 74.0 eV, and the peak derived from the quadrivalent platinum oxide corresponds to the peak of Pt4f_{5/2} with the peak top appearing at the position of 77.0 to 79.0 eV. It is preferable that I_{Pt2} / I_{Pt4} has a lower limit value of 1.1 or more. On the other hand, the upper limit of I_{Pt2} / I_{Pt4} is preferably 4.5 or less. As the value of I_{Pt2} / I_{Pt4} increases, the proportion of platinum metal tends to increase; however, by setting the value of I_{Pt2} / I_{Pt4} to 4.5 or less, the absolute amount of platinum oxide can be maintained, and the methane oxidation activity during the normal cycle and after exposure to a high temperature can both be improved.

In the present invention, a methane oxidation catalyst is achieved that is capable of suppressing both the aggregation of platinum oxide when the catalyst is exposed to a high temperature and the change of oxidation state of platinum from a divalent to a quadrivalent platinum oxide, and of maintaining the methane oxidation activity equal to that in the normal cycle even after the catalyst is exposed to a high temperature such as during a misfire by controlling the oxidation state of platinum so as to satisfy the conditions of the intensity of the absorption peak obtainable in the range of 11555 to 11570 eV in the XANES spectrum and, preferably, the conditions of the I_{Pt-o} / I_{Pt-Pt} ratio obtainable from the radial distribution function and the I_{Pt2} / I_{Pt4} ratio obtainable from the XPS measurement as above.

The average primary particle diameter of the platinum oxide supported on the tin oxide is 0.5 nm to 2.5 nm. When the average primary particle size of the platinum oxide is within the above range, the platinum oxide particles can exist in a highly dispersed state on the surface of the tin oxide, and can have a high methane oxidation activity. The average primary particle size of the platinum oxide is an average value obtained by observing the methane oxidation catalyst with a transmission electron microscope (TEM) and measuring the primary particle size of 200 platinum oxide particles. The average primary particle diameter of the platinum oxide is preferably 0.5 nm to 2.0 nm, and further preferably 0.7 nm to 1.5 nm. The average primary particle size of the platinum oxide can be determined, for example, by appropriately adjusting the supporting conditions such as the type of platinum salt, the temperature, the pH, and the concentration of the platinum solution when the platinum oxide is supported on the tin oxide as described below.

The content ratio of platinum element to tin element contained in the methane oxidation catalyst is 0.3 to 40 mol %. With respect to the content of the platinum oxide, when the content ratio of the platinum element is 0.3 mol % or more based on the tin element, the methane oxidation activity can be further expressed, and when the content is 40 mol % or less, the formation of coarse particles of the platinum oxide having an average primary particle size of about 50 nm or more can be suppressed. A more preferred content ratio of platinum element to tin element is 3.2 to 11 mol %. Note that, the content ratio of the platinum element to the tin element can be measured by inductively coupled plasma emission spectrometry (hereinafter also referred to as ICP emission spectrometry). ICP emission spectrometry is a method that uses plasma to excite atoms, and is characterized by its ability to measure multiple elements with a high sensitivity. A high-temperature argon plasma is generated using a plasma torch, and atoms and ions constituting a sample are excited by the high-temperature argon plasma. When an excited atom or ion returns to the ground state, the energy is emitted as light of a wavelength specific to that element (e.g., Sn, Pt, Ir), and the amount of a particular element is quantified by spectroscopic detection of the light.

In the methane oxidation catalyst of the present invention, an iridium oxide may be further supported on the tin oxide in addition to the platinum oxide. Further supporting of the iridium oxide will suppress aggregation of the platinum oxide particles when the catalyst is exposed to a high temperature, and therefore, the methane oxidation activity after the catalyst is exposed to a high temperature can be made equal to that in the normal cycle.

When the iridium oxide is further supported on the tin oxide, the content ratio of iridium element to tin element contained in the methane oxidation catalyst is preferably 0.03 to 20 mol %. Further supporting of the iridium oxide on the tin oxide such that the content ratio of the iridium element to the tin element is in the above range will allow the methane oxidation activity after the catalyst is further exposed to a high temperature to be equal to that in the normal cycle.

The above-mentioned platinum oxide and, if desired, the tin oxide used as a carrier for supporting an iridium oxide can be any kind used for the general methane oxidation catalyst without any limitation; however, the specific surface area is preferably 10 to 100 m² / g. The use of tin oxide having a specific surface area in the above range as a carrier will allow support of the platinum oxide particles (or both particles of the platinum oxide and the iridium oxide) in a uniformly dispersed state on the surface of the tin oxide without aggregation. The specific surface area of tin oxide is preferably 20 to 90 m² / g, and more preferably 35 to 60 m² / g. The specific surface area means a value measured by the BET method, and more specifically, the specific surface area can be calculated from the absorption amount and the area occupied by inert gas by absorbing an inert gas (for example, nitrogen gas) having a known molecular size on the surface of the measurement sample.

In order to adjust the specific surface area of the tin oxide, for example, it may be appropriate to optimize the synthesis, drying, and burning conditions in the tin oxide production process, and carry out mechanical pulverization of the tin oxide by a bead mill or the like. However, the present invention is not limited to such method.

For the purpose of suppressing sintering of the tin oxide and suppressing the decrease in specific surface area after burning, various elements may be used to form a solid-solution with the tin oxide or the surface of the tin oxide may be coated with a compound of various elements. Examples of the various elements include Si, Al, Zr, Ce, La, Fe, Mn, Ni, Co, Cu, W, Mo, V, Ca, Ba, Mg, Pd, Rh, and Ru.

It is preferable to use a tin oxide having an average particle size in the range of 0.1 µm to 100 µm. The use of the tin oxide having an average particle size in the above range will allow the platinum oxide particles to be uniformly dispersed and supported on the surface of the tin oxide particles, with the strength to be increased when formed into a honeycomb shape or a pellet shape. The average particle size of the tin oxide is preferably in the range of 0.5 µm to 50 µm and particularly preferably in the range of 1.0 µm to 20 µm. Note that, in the present specification, the average particle size means the volume accumulated particle size D50 measured by the laser diffraction particle size distribution measuring apparatus.

For the purpose of setting the average particle size of the tin oxide within the above range, for example, it may be appropriate to optimize the drying and burning conditions in the tin oxide production process, and carry out mechanical pulverization by a bead mill or the like of the tin oxide before or after being supported by the platinum oxide. However, the present invention is not limited to such method.

In the methane oxidation catalyst, the crystallite diameter of the tin oxide is preferably 5 nm to 100 nm. When the crystallite diameter of tin oxide is 5 nm to 100 nm, the platinum oxide particles can be uniformly dispersed and supported on the surface of the tin oxide, and the supported platinum oxide can be present on the surface of the tin oxide in a highly dispersed state. More preferably, the crystallite diameter is 10 nm to 50 nm and particularly preferably 12 nm to 35 nm.

For the purpose of adjusting the crystallite diameter of the tin oxide, for example, it may be appropriate to optimize the synthesis, drying, and burning conditions in the tin oxide production process, and carry out mechanical pulverization by a bead mill or the like of the tin oxide. However, the present invention is not limited to such method.

### < Process for Producing Methane Oxidation Catalyst >

The methane oxidation catalyst in which the platinum oxide is supported on the tin oxide can be produced by applying a known method capable of uniformly supporting platinum on the tin oxide and oxidizing the supported platinum as described below.

As an example, there is a method in which tin oxide powder (SnO₂ particles) is added to a platinum solution (Pt solution), then the solution is heated and evaporated to dryness and Pt is supported on the SnO₂ particles, and subsequently, the resultant is burnt in an oxygen atmosphere.

Specifically, a methane oxidation catalyst can be produced by dissolving dinitrodiamine Pt in nitric acid to prepare a platinum solution having a pH of 2 or less, preferably 1 or less, further heating the solution to a temperature of 50 °C to 80 °C, adding tin oxide powder to the solution, evaporating the solution to dryness, and after supporting platinum on the tin oxide particles, burning the resultant in an oxygen atmosphere.

Further, the methane oxidation catalyst obtained by supporting the platinum oxide and the iridium oxide on the tin oxide can be produced by applying a known method capable of uniformly supporting platinum and iridium on the tin oxide and oxidizing the supported platinum and iridium as described below.

As an example, there is a method in which tin oxide powder (SnO₂ particles) is added to a mixed solution of a platinum solution (Pt solution) and an iridium solution (Ir solution), the solution is heated and evaporated to dryness, Pt and Ir are supported on the SnO₂ particles, and then the resultant is burnt in an oxygen atmosphere.

Specifically, dinitrodiamine Pt is dissolved in nitric acid to prepare a platinum solution having a pH of 2 or less, preferably 1 or less. Then, hexachloroiridate hydrate is dissolved in nitric acid to prepare an iridium solution having a pH of 2 or less, preferably 1 or less. A methane oxidation catalyst can be produced by mixing a prepared platinum solution and an iridium solution, heating the resulting mixed solution to a temperature of 50 °C to 80 °C, adding tin oxide powder to the solution, evaporating the solution to dryness, supporting platinum and iridium on the tin oxide particles, and burning the mixture in an oxygen atmosphere.

As another example, there can be mentioned a method in which tin oxide (SnO₂ particles) is added to a platinum solution (Pt solution), the solution is heated and evaporated to dryness, Pt is supported on the SnO₂ particles, and then the SnO₂ particles are burnt in an oxygen atmosphere to obtain catalyst particles in which a platinum oxide is supported on the tin oxide (SnO₂ particles), then the catalyst particles are added to an iridium solution (Ir solution), the solution is heated and evaporated to dryness, and the SnO₂ particles are supported on Ir and then burnt in an oxygen atmosphere.

Among the above 2 exemplified methods, a methane oxidation catalyst having excellent methane oxidation activity is more likely to be obtainable by using a mixed solution of a Pt solution and an Ir solution.

The sintering conditions in the oxygen atmosphere are preferably 400 to 700 °C for 2 to 24 hours and preferably 3 to 6 hours. By appropriately adjusting the burning conditions, the oxidation state of platinum can be controlled so as to satisfy the conditions of the intensity of the absorption peak obtained in the range of 11555 to 11570 eV in the XANES spectrum and preferably the conditions of the I_{Pt-o} / I_{Pt-Pt} ratio obtained from the radial distribution function and the I_{Pt2} / I _{Pt4} ratio obtained from the XPS measurement. The oxygen atmosphere in which the sintering is performed preferably has an oxygen concentration of 22 % by volume or more, more preferably 40 % by volume or more, and particularly preferably is performed in an atmosphere having an oxygen concentration of 50 % by volume or more.

The above-mentioned methane oxidation catalyst in which a platinum oxide (and optionally an iridium oxide) is supported on a tin oxide can also be produced by a method other than burning in an oxygen atmosphere. For example, it is also possible to directly support the platinum oxide (or the platinum oxide and the iridium oxide) on the tin oxide particles by adding tin oxide powder to a platinum solution (or a mixed solution of a platinum solution and an iridium solution), subjecting the solution to aeration treatment such as air bubbling or the like, and then heating and evaporating the solution to dryness.

### < Form of Catalyst >

Examples of the form of the methane oxidation catalyst of the present invention include, but are not limited to, powder, particulate and granular (including spherical) forms. The methane oxidation catalyst can be used as a pellet (cylindrical and circular), a tablet (pill), honeycomb (monolith), or plate (layered) molding, i.e., a methane oxidation catalyst molding, by molding a methane oxidation catalyst in a powder form for example, or can be used as a form in which the molding is laminated on a substrate made of a ceramic or a metal material.

Examples of the material of the substrate include heat-resistant materials such as ceramics and metallic materials. Examples of the material of the ceramic substrate include heat-resistant ceramic materials such as cordierite, cordierite-alpha alumina, silicon nitride, zirconium mullite, alumina-silica magnesia, zirconium silicate, sillimanite, magnesium silicate, zirconium, petalite, alpha alumina, and aluminosilicates. The metal substrate material may be heat-resistant metals, such as stainless steel or other suitable iron-based heat-resistant alloys.

The shape of the substrate is not particularly limited and may be a honeycomb, pellet, or spherical shape.

For example, mention can be made to a method of forming a catalyst layer on the surface of a substrate by mixing and stirring a powder of a methane oxidation catalyst according to the present invention with a binder and water as required to form a slurry, coating the obtained slurry on a substrate such as a ceramic honeycomb body, and baking the same. Any known method may be employed for the method for producing the catalyst, without being limited to the above example. In any of the production methods, the catalyst layer may be a single layer or a multilayer of 2 or more layers.

### EXAM PLES

Next, the embodiments of the present invention will be specifically described with reference to the following Examples, without being limited thereby.

### < Example 1 >

8.2g of dinitrodiammine Pt was dissolved in a solution prepared by diluting 3.5g of concentrated nitric acid with 1000 ml of pure water to prepare a Pt solution having a pH of 1.5 or less. To this Pt solution was added 120 g of tin oxide particles (specific surface area determined by the BET method is 40 m² / g, D50 = 1.3 µm), the solution was heated to 70 °C to evaporate the solution to dryness, and platinum was supported on the tin oxide particles. Subsequently, the resultant was burnt at 550 °C for 3 hours in an oxygen atmosphere (oxygen concentration = 50 % by volume), and the obtained particles were crushed in a mortar to obtain a tin oxide powder on which platinum oxides were supported.

### < Example 2 >

3.3g of hexachloroiridate hydrate was dissolved in a solution prepared by diluting 3.5 g of concentrated nitric acid with 1000 ml of pure water to prepare an Ir solution having a pH of 1.5 or less. The Ir solution and the Pt solution prepared in Example 1 were mixed at a mass ratio of 2:5 to prepare a Pt / Ir mixed solution. To this Pt / Ir mixed solution was added 120 g of the tin oxide particles used in Example 1, the solution was heated to 80 °C to evaporate the solution to dryness, and platinum and iridium were supported on the tin oxide particles. Subsequently, the resultant was burnt at 550 °C for 3 hours in an oxygen atmosphere (oxygen concentration = 50 vol %), and the obtained particles were crushed in a mortar to obtain tin oxide powder on which platinum oxides and iridium oxides were supported.

### < Example 3 >

To the Pt solution prepared in Example 1, 120g of tin oxide particles (specific surface area determined by the BET method is 14 m² / g and D50 = 44 µm) were added, the solution was heated to 80 °C to evaporate the solution to dryness, and platinum was supported on the tin oxide particles. Subsequently, the resultant was burnt at 550 °C for 3 hours in an oxygen atmosphere (oxygen concentration = 50 % by volume), and the obtained particles were crushed in a mortar to obtain tin oxide powder on which platinum oxides were supported.

Next, 40 mass % of the Ir solution prepared in Example 2 was added to the tin oxide powder obtained above, the solution was heated to 80 °C to evaporate the solution to dryness, and iridium was supported on the tin oxide particles on which platinum oxides were supported. Subsequently, the resultant was burnt at 550 °C for 3 hours in an oxygen atmosphere (oxygen concentration = 50 vol %), and the obtained particles were crushed in a mortar to obtain tin oxide powder on which platinum oxides and iridium oxides were supported.

### < Comparative Example 1 >

Tin oxide powder on which platinum was supported was obtained in the same manner as in Example 1, except that burning was carried out at 100 °C for 3 hours in a hydrogen gas atmosphere instead of burning at 550 °C for 3 hours in an oxygen atmosphere (oxygen concentration = 50 vol %).

### < Comparative Example 2 >

Tin oxide powder on which platinum was supported was obtained in the same manner as in Example 1, except that burning was performed at 550 °C for 3 hours in an air atmosphere (oxygen concentration: about 21 vol %), instead of burning at 550 °C for 3 hours in an oxygen atmosphere (oxygen concentration: 50 vol %). Next, 3.3g of hexachloroiridate hydrate was dissolved in a solution prepared by diluting 3.5g of concentrated nitric acid with 500 ml of pure water to prepare an Ir solution having a pH of 1 or less, 120g of platinum-supported tin oxide powder obtained was added to the Ir solution, the solution was heated to 80 °C to evaporate the solution to dryness, and then the resultant was burnt at 550 °C for 3 hours in an air atmosphere (oxygen concentration: 21 vol %) to obtain tin oxide powder on which platinum and iridium were supported.

### < Evaluation of Methane Oxidation Catalyst >

### (1) X-ray absorption fine structure (XAFS) measurement

The X-ray absorption fine structure spectrum of each methane oxidation catalyst obtained as described above was measured using the XAFS analyzer (BL11S2) of the Aichi Synchrotron Light Center (AichiSR). Also, 2 samples of the standard platinum foil and the standard PtO₂ were measured for the X-ray absorption fine structure spectrum in the same manner. A platinum foil manufactured by Nicola Co., Ltd. (product number: PT - 353138) was used as the standard platinum foil, and PtO₂ (459925) manufactured by Sigma Aldrich was used as the standard PtO₂. The measurement conditions were as follows.
- Beamline
   Light energy: 11 to 13 keV
   Beam size: 0.50 mm × 0.30 mm (H × V)
- Detection system
   Spectrograph: Si (111) 2 crystal spectrograph
   Detector: Ion chamber
- Analysis software
   Athena (ver.0.8.056)

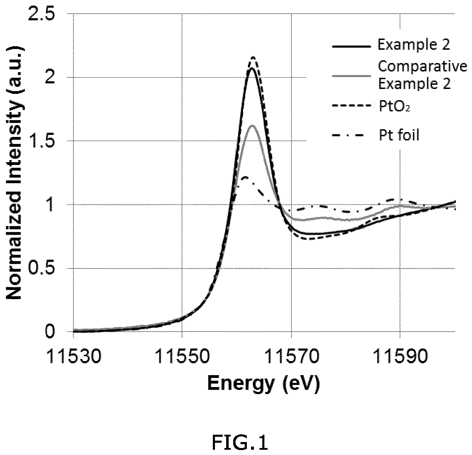

FIG. 1 shows the L₃ edge XANES spectrum of the platinum atoms measured by the transmission method for the methane oxidation catalysts of Example 2 and Comparative Example 2 together with the XANES spectrum of the standard platinum foil and the standard PtO₂. The intensity of each absorption peaks obtained in the range of 11555 to 11570 eV in each methane oxidation catalyst and standard platinum foil obtained from the L₃ edge XANES spectrum of the platinum atoms and the value obtained by dividing the intensity of the absorption peaks of each methane oxidation catalyst by the absorption peak intensity of the standard platinum foil were as shown in Table 1.

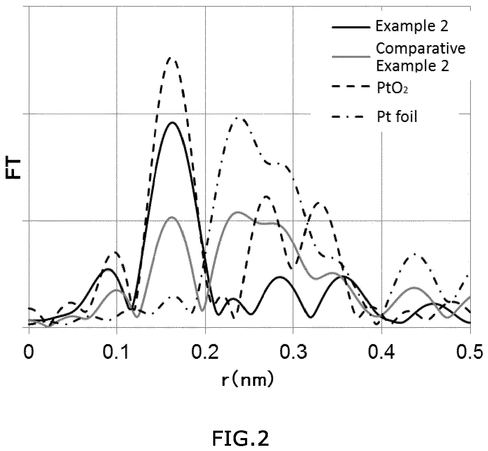

FIG. 2 shows a radial distribution function obtained by Fourier transformation of the L₃ edge EXAFS spectrum of the platinum atoms for each of the methane oxidation catalyst of Example 2 and Comparative Example 2, and the standard platinum foil and the standard PtO₂. In addition, the maximum peak intensity corresponding to the bond length of platinum atom-platinum atom bonds (0.20 to 0.25 nm) obtained from the radial distribution function of each methane oxidation catalyst was expressed as I_{Pt-Pt} and the maximum peak intensity corresponding to the bond length of platinum atom-oxygen atom bonds (0.10 to 0.20 nm) was expressed as I_{Pt-o}, and the ratio of I_{Pt-o} to I_{Pt-Pt} (I_{Pt-Po} / I_{Pt-Pt}) was as shown in Table 1.

### (2) X-ray photoelectron spectroscopy (XPS) surface analysis

The surfaces of the methane oxidation catalysts of each Example were analyzed by X-ray photoelectron spectroscopy (XPS) using an X-ray photoelectron spectroscopy apparatus (VersaProbe II, manufactured by Ulvac-Phi Incorporated). The measurement conditions were as follows.
- X-ray source: Al ray (1486.6 eV)
- Irradiation power: 100 W

The peak intensity derived from the divalent platinum oxide (70.0 to 74.0 eV) was expressed as I_{Pt2}, and the peak intensity derived from the quadrivalent platinum oxide (77.0 to 79.0 eV) was expressed as I_{Pt4}, and the ratios of I_{Pt2} to I_{Pt4} (I_{Pt2} / I_{Pt4}) obtained from the XPS spectrum of the methane oxidation catalysts of the respective Examples and Comparative Examples were as shown in Table 1.

### (3) Measurement of Content Ratio of Platinum Element and Iridium Element

Each methane oxidation catalyst was dissolved in alkali and diluted with hydrochloric acid to prepare a solution, and this solution was analyzed by an ICP emission spectroscope (SPS-3000 (product name) manufactured by SII Nanotechnology Inc.) to determine the concentration (mol %) of tin element, the concentration (mol %) of platinum element and the concentration (mol %) of iridium element. The obtained values were used to calculate the content ratio of platinum element to tin element and the content ratio of iridium element to tin element. The content of platinum element and the content of iridium element with respect to tin element of each methane oxidation catalyst were as shown in Table 1.

### (4) Methane purification performance

Each methane oxidation catalyst was compression molded, and the molding was subsequently ground to obtain catalyst particles sized from 0.35 mm to 0.6 mm. The obtained catalyst particles (0.1g) were charged into a ϕ 9 mm-quartz reactor, and a model gas (inlet gas) having a composition of CH₄: 0.2 %, O₂: 10%, CO₂: 4.9 %, H₂O 10 %, and N₂ balance: 74.9% was supplied at a space velocity (SV) of 150,000h⁻¹, and while elevating the temperature to 600 °C at a temperature elevation rate of 10 °C / min, the CH₄ concentration of the gas which passed through the above-described catalyst particles was measured by a hydrogen flame ionization detector. The value of dividing the difference between the CH₄ concentration of the inlet gas and the outlet gas by the CH₄ concentration of the inlet gas and multiplying 100 was calculated as the conversion ratio, and the temperature at which the conversion ratio became 50 % was defined as T₅₀ (°C).

In order to evaluate the high-temperature durability of the methane oxidation catalysts, each methane oxidation catalyst was burnt at 650 °C for 12 hours in an air atmosphere, and T₅₀ (°C) of each burnt methane oxidation catalyst was measured in the same manner as described above. The T₅₀ (°C) before and after the high-temperature durability test was as shown in Table 1.

**Table 1**

| Sample | XANES Peak Intensity | XANES Peak Intensity of each sample/ Peak Intensity of standard Pt foil | EXAFS I_{Pt-o}/I_{Pt-Pt} | XPS I_{Pt2}/I_{Pt4} | Pt Element Ratio (mol %) | Ir Element Ratio (mol %) | Before high-temperature durability test T₅₀ (°C) | After high-temperature durability test T₅₀ (°C) |
|---|---|---|---|---|---|---|---|---|
| Standard Pt foil | 1.2 | - | - | - | - | - | - | - |
| Standard PtO₂ | 2.2 | - | - | - | - | - | - | - |
| Example 1 | 2.2 | 1.8 | 14.6 | 3.9 | 3.2 | - | 450 | 508 |
| Example 2 | 2.1 | 1.8 | 7.1 | 1.8 | 3.3 | 0.34 | 442 | 471 |
| Example 3* | 2.07 | 1.7 | 5.3 | 2.0 | 3.3 | 0.34 | 460 | 550 |
| Comparative Example 1 | 1.4 | 1.2 | 0.88 | 0.8 | 3.4 | - | 462 | 574 |
| Comparative Example 2 | 1.6 | 1.3 | 0.79 | 0.2 | 3.2 | 0.34 | 515 | 557 |

| | | | | | | | | |
|---|---|---|---|---|---|---|---|---|
| *Reference Example | | | | | | | | |

As is clear from Table 1, the methane oxidation catalysts in which the platinum oxides were supported on the tin oxides (Examples 1 to 3) had T₅₀ (°C) that is equal to or lower than that of the methane oxidation catalyst in which platinum was supported on the tin oxide (Comparative Example 1) before the high-temperature durability test, and it can be seen that the methane oxidation activity was equal to or superior to that of the methane oxidation catalyst in which platinum was supported on the tin oxide. After the high-temperature durability test, T₅₀ (°C) of the methane oxidation catalyst in which platinum was supported on the tin oxide (Comparative Example 1) was remarkably increased, and it can be seen that the methane oxidation activity was significantly reduced when the catalyst temperature became high.

On the other hand, it can be seen that the methane oxidation catalysts in which the platinum oxides are supported on the tin oxides (Examples 1 to 3) having the intensity of the absorption peak obtained in the range of 11555 to 11570 eV in the XANES spectrum 1.4 times or more the intensity of the absorption peak measured using the standard platinum foil had low T₅₀ (°C) even after the high-temperature durability test, and can maintain the methane oxidation activity before the catalyst is exposed to a high temperature (that is, the temperature of the catalyst in the normal cycle, which is about 300 to 500 °C).

Note that, the methane oxidation catalyst of Comparative Example 2 burnt in the air atmosphere had higher T₅₀ (°C) both before and after the high-temperature durability test than the methane oxidation catalysts of Examples 1 to 3 burnt in the oxygen atmosphere, and is inferior in methane oxidation activity.

## Claims

1. A methane oxidation catalyst on which a platinum oxide is supported on a tin oxide carrier, wherein
the intensity of an absorption peak obtained in the range of 11555 to 11570 eV in the L₃ edge X-ray absorption near-edge structure (XANES) spectrum of a platinum atom is 1.4 times or more the intensity of an absorption peak measured using a standard platinum foil,
when the maximum peak intensity corresponding to the bond length of the platinum atom-platinum atom bond is expressed as I_{Pt-Pt}, and the maximum peak intensity corresponding to the bond length of the platinum atom-oxygen atom bond is expressed as I_{Pt-o} in the radial distribution function obtained by Fourier transformation of the L₃ edge extended X-ray absorption fine structure (EXAFS) spectrum of the platinum atom, the ratio of I_{Pt-o} to I_{Pt-Pt} (I_{Pt-o} / I_{Pt-Pt}) is 7.0 or more,
the average primary particle diameter of the platinum oxide is 0.5 nm to 2.5 nm, and
the content ratio of platinum element to tin element is 0.3 to 40 mol %.

2. The methane oxidation catalyst according to claim 1, wherein
the platinum oxide comprises a divalent platinum oxide having a valence of platinum of 2 and a quadrivalent platinum oxide having a valence of platinum of 4.

3. The methane oxidation catalyst according to claim 2, wherein,
the case when the peak intensity derived from the divalent platinum oxide is expressed as I_{Pt2} and the peak intensity derived from the quadrivalent platinum oxide is expressed as I_{Pt4} in the X-ray photoelectron spectroscopy spectrum measured by X-ray photoelectron spectroscopy (XPS), the ratio of I_{Pt2} to I_{Pt4} (I_{Pt2} / I_{Pt4}) is greater than 1.

4. The methane oxidation catalyst according to any one of claims 1 to 3, wherein
an iridium oxide is further supported on the tin oxide carrier.

5. The methane oxidation catalyst according to claim 4, wherein
the content ratio of iridium element to tin element contained in the methane oxidation catalyst is 0.03 to 20 mol %.

## Patentansprüche

1. Methanoxidationskatalysator, bei dem ein Platinoxid auf einem Zinnoxidträger geträgert ist, wobei
die Intensität eines Absorptionspeaks, erhalten im Bereich von 11555 bis 11570 eV im L₃-Kanten-Röntgenabsorptions-Nahkantenstruktur-Spektrum (XANES) eines Platinatoms, das 1,4-fache oder mehr der Intensität eines Absorptionspeaks beträgt, der unter Verwendung einer Standard-Platinfolie gemessen wird,
wenn die maximale Peak-Intensität, die der Bindungslänge der Platinatom-Platinatom-Bindung entspricht, als I_{Pt-Pt} ausgedrückt wird und die maximale Peak-Intensität, die der Bindungslänge der Platinatom-Sauerstoffatom-Bindung entspricht, als I_{Pt-o} ausgedrückt wird, in der Radialverteilungsfunktion, erhalten durch FourierTransformation des erweiterten L₃-Kanten-Röntgenabsorptions-Feinstruktur-Spektrum (EXAFS) des Platinatoms, das Verhältnis von I_{Pt-o} zu I_{Pt-Pt} (I_{Pt-o/}I_{Pt-Pt}) 7,0 oder mehr beträgt,
der durchschnittliche Primärpartikeldurchmesser des Platinoxids 0,5 nm bis 2,5 nm beträgt und
das Gehaltsverhältnis von Platinelement zu Zinnelement 0,3 bis 40 Mol-% beträgt.

2. Methanoxidationskatalysator gemäß Anspruch 1, wobei
das Platinoxid ein zweiwertiges Platinoxid mit einer Wertigkeit des Platins von 2 und ein vierwertiges Platinoxid mit einer Wertigkeit des Platins von 4 umfasst.

3. Methanoxidationskatalysator gemäß Anspruch 2, wobei,
in dem Fall, in dem die von dem zweiwertigen Platinoxid stammende Peak-Intensität als I_{Pt2} ausgedrückt wird und die von dem vierwertigen Platinoxid stammende Peak-Intensität als I_{Pt4} ausgedrückt wird, in dem durch Röntgen-Photoelektronen-Spektroskopie (XPS) gemessenen Röntgen-Photoelektronen-Spektrum das Verhältnis von I_{Pt2} zu I_{Pt4} (I_{Pt2}/I_{Pt4}) größer als 1 ist.

4. Methanoxidationskatalysator gemäß einem der Ansprüche 1 bis 3, wobei
weiterhin ein Iridiumoxid auf dem Zinnoxidträger geträgert ist.

5. Methanoxidationskatalysator gemäß Anspruch 4, wobei
das Gehaltsverhältnis von Iridiumelement zu Zinnelement in dem Methanoxidationskatalysator 0,03 bis 20 Mol-% beträgt.

## Revendications

1. Catalyseur d'oxydation du méthane sur lequel un oxyde de platine est supporté par un support d'oxyde d'étain, dans lequel
l'intensité d'un pic d'absorption obtenu dans la plage de 11555 à 11570 eV dans le spectre de structure d'absorption près du front de rayons X (XANES) L₃ d'un atome de platine est égale à 1,4 fois ou plus de l'intensité d'un pic d'absorption mesuré en utilisant une feuille de platine standard,
lorsque l'intensité de pic maximum correspondant à la longueur de la liaison de la liaison atome de platine-atome de platine est exprimée par I_{Pt-Pt} et que l'intensité de pic maximum correspondant à la longueur de la liaison de la liaison atome de platine-atome d'oxygène est exprimée par I_{Pt-o} dans la fonction de distribution radiale obtenue par une transformation de Fourier du spectre de structure fine d'absorption près du front de rayons X étendue (EXAFS) L₃ de l'atome de platine, le rapport entre I_{Pt-o} et I_{Pt-Pt} (I_{Pt-o}/I_{Pt-Pt}) est de 7,0 ou plus,
le diamètre de particule primaire moyen de l'oxyde de platine est de 0,5 nm à 2,5 nm, et
le rapport de teneur entre l'élément platine et l'élément étain est compris entre 0,3 et 40 % en moles.

2. Catalyseur d'oxydation du méthane selon la revendication 1, dans lequel
l'oxyde de platine comprend un oxyde de platine divalent présentant une valence du platine de 2 et un oxyde de platine quadrivalent présentant une valence du platine de 4.

3. Catalyseur d'oxydation du méthane selon la revendication 2, dans lequel
lorsque l'intensité de pic dérivée de l'oxyde de platine divalent est exprimée par I_{Pt2} et que l'intensité de pic dérivée de l'oxyde de platine quadrivalent est exprimée par I_{Pt4} dans le spectre de spectroscopie photoélectronique à rayons X mesuré par spectroscopie photoélectronique à rayons X (XPS), le rapport entre I_{Pt2} et I_{Pt4} (I_{Pt2}/I_{Pt4}) est supérieur à 1.

4. Catalyseur d'oxydation du méthane selon l'une quelconque des revendications 1 à 3, dans lequel
un oxyde d'iridium est en outre supporté sur le support d'oxyde d'étain.

5. Catalyseur d'oxydation du méthane selon la revendication 4, dans lequel
le rapport de teneur entre l'élément d'iridium et l'élément d'étain contenus dans le catalyseur d'oxydation du méthane est de 0,03 et 20 % en moles.
